# EUROPEAN PATENT APPLICATION

(11) **EP 4 640 296 A1**
(43) Date of publication of application: **29.10.2025**
(21) Application number: 23907107.9
(22) Date of filing: 20.12.2023
(51) Int. Cl.: B01D 53/04

(54) **REACTOR, GAS RECOVERY DEVICE, AND GAS RECOVERY SYSTEM**

(30) Priority: 20.12.2022 WO PCT/JP2022/046959
(71) Applicant: NGK Insulators, Ltd., Nagoya-shi, Aichi 467-8530 (JP)
(72) Inventor: ORIHARA, Maho, Nagoya-shi, Aichi 467-8530 (JP); WADA, Takuya, Nagoya-shi, Aichi 467-8530 (JP); MURAKAMI, Keiya, Nagoya-shi, Aichi 467-8530 (JP); OYABU, Tomofumi, Nagoya-shi, Aichi 467-8530 (JP); TAKAGI, Yoshifumi, Nagoya-shi, Aichi 467-8530 (JP); MIYAIRI, Yukio, Nagoya-shi, Aichi 467-8530 (JP); AOKI, Yoichi, Nagoya-shi, Aichi 467-8530 (JP); OKUMA, Yusuke, Nagoya-shi, Aichi 467-8530 (JP); TAKAHASHI, Michio, Nagoya-shi, Aichi 467-8530 (JP)
(74) Representative: MERH-IP Matias Erny Reichl Hoffmann Patentanwälte PartG mbB
(86) International application number: PCT/JP2023/045788
(87) International publication number: WO 2024/135747

(57) **Abstract**

A reactor includes: a honeycomb structure including an outer peripheral wall 10 and porous partition walls 30 provided on an inner side of the outer peripheral wall 10, the partition walls 30 defining first cells 23 and second cells 24 through which a process gas containing a trapping target gas can flow, each of the first cells 23 and the second cells 24 extending from an inflow end face 20 to an outflow end face 21 of the honeycomb structure, the first cells 23 and the second cells 24 being adjacent to each other via the partition walls 30; and a functional material 50 having a pellet shape, the functional material 50 being filled in the second cells 24.

## Description

### FIELD OF THE INVENTION

This invention relates to a reactor, a gas recovery device, and a gas recovery system.

### BACKGROUND OF THE INVENTION

As a measure against global warming, there is a growing demand for the effective use of CO₂, including the recovery of CO₂ from factory exhaust gases, and combustion exhaust gases of CO₂ emission sources such as thermal power plants, and direct CO₂ recovery (direct air capture: DAC) and fixation from the atmosphere, as well as methanation of recovered CO₂.

The proposed main method for recovering CO₂ is to adsorb CO₂ onto an adsorbent capable of adsorbing CO₂, desorb the CO₂ by changing a temperature, pressure, humidity, and the like, recover it as highly concentrated CO₂, and use it as a raw material for the chemical industry, or to inject it into the underground and fix it. The adsorbent is supported on porous pellets, porous particles, fiber filters, and honeycomb structures and used (e.g., Non-Patent Literature 1).

### PRIOR ART

### Non-Patent Literature

[Non-Patent Literature 1] "Cost and Evaluation of Direct Air Capture (DAC) Method for Carbon Dioxide (Vol. 2) - Adsorption Separation Process -", Center for Low Carbon Society Strategy, Japan Science and Technology Agency, March 2021.

### SUMMARY OF THE INVENTION

### Problem to be Solved by the Invention

Non-Patent Literature 1 describes a reactor in which an adsorbent is supported (an adsorbent layer is formed) on each surface of partition walls of a honeycomb structure made of a mullite material, with a thickness of partition walls of 0.15 mm, a cell density of 400 cells/inch² (62 cells/cm²) and an opening ratio of 75.0%. Since an amount of CO₂ recovered is proportional to an amount of the adsorbent retained in the reactor, it is sufficient to place as many adsorbents as possible in the reactor.

However, in the method for supporting the adsorbent on each surface of the partition walls of the honeycomb structure, increasing the amount of the adsorbent supported causes the opening ratio of the honeycomb structure to decrease due to the thickness of the adsorbent layer, so that the pressure loss increases when the process gas containing CO₂ is circulated. As a result, a kinetic energy required for allowing the process gas to flow through the honeycomb structure increases, resulting in an increased reactor operating cost. As the thickness of the adsorbent layer increases, it becomes difficult for the process gas to reach the interior of the adsorbent layer sufficiently, so that adsorption performance of CO₂ also decreases. Similarly, in the CO₂ desorption process, it is difficult to desorb CO₂ sufficiently from the interior of the adsorbent layer.

In view of deterioration of the adsorbent when the reactor is used for a long period of time, it is effective to retain as much adsorbents as possible in the reactor to extend the maintenance period, but the above method has limitations in increasing the amount of the adsorbent retained.

On the other hand, the methods for supporting the adsorbent on porous pellets and forming the adsorbent itself into pellets can be considered, but these methods are inferior to the method for supporting the adsorbent on each surface of the partition walls of the honeycomb structure in terms of contact area with the process gas and of pressure loss. It can also be considered that the partition walls of the honeycomb structure are formed with the adsorbent, but, in this case, it is difficult for the process gas to diffuse sufficiently in the direction of the thickness of the partition walls, and the strength of the honeycomb structure is also reduced.

Although the case of the reactor in which the trapping target gas is CO₂ and the adsorbent capable of adsorbing CO₂ is used is described as an example, the same problem as described above may occur for a reactor in which the trapping target gas is a component other than CO₂ and a functional material other than the adsorbent capable of adsorbing CO₂ is used.

This invention was made to solve the above problems, and an object of this invention is to provide a reactor that can increase an amount of a trapping target gas by increasing an amount of a functional material retained while suppressing an increase in pressure loss, a gas recovery device, and a gas recovery system.

### Means for Solving the Problem

As results of intensive studies for reactors including honeycomb structures, the inventors have found that the above problems can be solved by selectively filling specific cells of a honeycomb structure having a specific structure with a functional material, and they have completed this invention. In other words, the invention is exemplified as follows:
(1) A reactor, comprising:
   a honeycomb structure comprising:
      an outer peripheral wall and
      porous partition walls provided on an inner side of the outer peripheral wall, the partition walls defining first cells and second cells through which a process gas containing a trapping target gas can flow, each of the first cells and the second cells extending from an inflow end face to an outflow end face of the honeycomb structure, the first cells and the second cells being adjacent to each other via the partition walls; and
   a functional material having a pellet shape, the functional material being filled in the second cells.
(2) The reactor according to (1), wherein the honeycomb structure further comprises second plugged portions provided on the inflow end face side and/or the outflow end face of the second cells.
(3) The reactor according to (2), wherein the second plugged portions are provided on the outflow end face side of the second cells, and the second plugged portions are dense or porous.
(4) The reactor according to (3), further comprising first plugged portions provided at the first cells on the inflow end face side.
(5) The reactor according to (2), wherein the second plugged portions are provided on the inflow end face side of the second cells, and the second plugged portions are dense or porous.
(6) The reactor according to (5), further comprising first plugged portions provided at the first cells on the outflow end face side.
(7) The reactor according to (2), wherein the second plugged portions are provided on the inflow end face side and the outflow end face side of the second cells, the second plugged portions on the inflow end face side are dense, and the second plugged portions on the outflow end face side are dense or porous.
(8) The reactor according to (4) or (6), wherein the first plugged portions are dense.
(9) The reactor according to any one of (1) to (8), wherein each of the first cells and the second cells has a triangular, quadrangular, hexagonal, or octagonal shape, or a combination thereof, in a cross section orthogonal to an extending direction of the first cells and the second cells.
(10) The reactor according to any one of (1) to (9), wherein the outer peripheral wall and the partition walls comprise at least one selected from cordierite, mullite, alumina, silicon carbide, and Si-bonded silicon carbide as a main component.
(11) The reactor according to any one of (1) to (10), wherein the partition walls have a thickness of 0.05 mm to 5 mm.
(12) The reactor according to any one of (1) to (11), wherein the partition walls have a porosity of 30% or more and less than 80%.
(13) The reactor according to any one of (1) to (12), wherein the partition walls have an average pore diameter of 10 µm to 300 µm.
(14) The reactor according to any one of (1) to (13), wherein the functional material is an adsorbent.
(15) The reactor according to (14), wherein the adsorbent is at least one selected from an amine compound, an organometallic complex, and a nanoporous ceramic or mesoporous silica on which the amine compound and/or the organometallic complex are supported.
(16) The reactor according to any one of (1) to (15), wherein a particle diameter of the functional material having the pellet shape is lower on the outflow end face side than in a central portion in the extending direction of the second cells.
(17) The reactor according to any one of (1) or (16), wherein the particle diameter of the functional material having the pellet shape is higher on the outer peripheral wall side than in a central portion in a direction orthogonal to the extension direction of the second cells.
(18) The reactor according to any one of (1) to (17), wherein the first cells are located at position facing the outer peripheral wall.
(19) The reactor according to any one of (2) to (8), wherein the second plugged portions are made of a resin.
(20) The reactor according to (4) or (6), wherein the first plugged portions are made of a resin.
(21) The reactor according to any one of (1) to (20), wherein the honeycomb structure has a quadrangular pillar shape having a length of one side of the inflow end face and the outflow end face of 100 to 500 mm, and a length in the extending direction of the first cells and the second cells of 100 to 1,000 mm.
(22) A gas recovery device for recovering and releasing a trapping target gas contained in a process gas, the gas recovery device comprising:
   the reactor according to any one of (1) to (21);
   a gas feed pipe configured to feed the process gas or a purge gas to an inflow port of the reactor; and
   a gas discharge pipe configured to discharge the process gas or the purge gas from an outflow port of the reactor.
(23) The gas recovery device according to (22),
   wherein the gas feed pipe has a gas feed branch pipe that branches into two parts, the gas feed branch pipe being a first gas feed branch pipe configured to feed the process gas and a second gas feed branch pipe configured to feed the purge gas,
   wherein the gas discharge pipe has a gas discharge branch pipe that branches into two parts, the gas discharge branch pipe being a first gas discharge branch pipe configured to discharge the process gas and a second gas discharge branch pipe configured to discharge the purge gas, and
   wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.
(24) The gas recovery device according to (22),
   wherein the gas feed pipe has two independent gas feed pipes, the gas feed pipes being a first gas feed pipe configured to feed the process gas and a second gas feed pipe configured to feed the purge gas,
   wherein the gas discharge pipe has two independent gas discharge pipes, the gas discharge pipes being a first gas discharge pipe configured to discharge the process gas and a second gas discharge pipe configured to discharge the purge gas,
   wherein the reactor can be provided between the first gas feed pipe and the first gas discharge pipe or between the second gas feed pipe and the second gas discharge pipe, and
   wherein the gas recovery device further comprises a transfer mechanism configured to transfer the reactor between the first gas feed pipe and the first gas discharge pipe or between the second gas feed pipe and the second gas discharge pipe.
(25) The gas recovery device according to (22), further comprising a heating mechanism configured to heat the reactor.
(26) A gas recovery system for recovering and releasing a trapping target gas contained in a process gas, the gas recovery system comprising:
   a gas recovery device comprising an attachable/detachable portion configure to attach and detach the reactor according to any one of (1) to (21), a gas feed pipe configured to feed the process gas to an inflow port of the reactor, and a gas discharge pipe configured to discharge the process gas from an outflow port of the reactor;
   a gas release device comprising an attachable/detachable portion configure to attach and detach the reactor, a gas feed pipe configured to feed a purge gas to the inflow port of the reactor, and a gas discharge pipe configured to discharge the purge gas from the outflow port of the reactor, and
   a transfer device configured to transfer the reactor that has recovered the trapping target gas by the gas recovery device to the gas release device and also to transfer the reactor that has released the trapping target gas by the gas release device to the gas recovery device.
(27) The gas recovery system according to (26), wherein the transfer device comprises a vehicle.

### Effects of Invention

According to the present invention, it is possible to provide a reactor that can increase an amount of a trapping target gas by increasing an amount of a functional material retained while suppressing an increase in pressure loss, a gas recovery device, and a gas recovery system.

### BRIEF DESCRIPTION OF THE DRAWINGS

FIG. 1A is a schematic view of an inflow end face and an outflow end face of a reactor according to an embodiment of the invention;
FIG. 1B is a schematic view of the cross sectional taken along the line a-a' in FIG. 1A;
FIG. 2A is a schematic view of a cross section of a reactor according to another embodiment of the invention, which is parallel to the extension direction of each cell;
FIG. 2B is a schematic view of a cross section of a reactor according to another embodiment of the invention, which is parallel to the extension direction of each cell;
FIG. 3A is a schematic view of a cross section of a reactor according to another embodiment of the invention, which is parallel to the extension direction of each cell;
FIG. 3B is a schematic view of a cross section of a reactor according to another embodiment of the invention, which is parallel to the extension direction of each cell;
FIG. 4A is a schematic view of a cross section of a reactor according to another embodiment of the invention, which is parallel to the extension direction of each cell;
FIG. 4B is a schematic view of a cross section of a reactor according to another embodiment of the invention, which is parallel to the extension direction of each cell;
FIG. 5A is a schematic view of an inflow end face of a reactor according to another embodiment of the invention;
FIG. 5B is a schematic view of the outflow end face of the reactor in FIG 5A;
FIG. 5C is a schematic view of the cross sectional taken along the line a-a' in FIGS. 5A and 1B;
FIG. 5D is a partially enlarged view for explaining the flow of a processing gas;
FIG. 6A is a schematic view of an inflow end face of a reactor according to another embodiment of the invention;
FIG. 6B is a schematic view of the outflow end face of the reactor in FIG 6A;
FIG. 7A is a schematic view of a cross section of a reactor according to another embodiment of the invention, which is parallel to the extension direction of each cell;
FIG. 7B is a partially enlarged view for explaining the flow of a processing gas;
FIG. 8 is a partially enlarged view of the inflow end face for illustrating the shape of each cell;
FIG. 9 is a partially enlarged view of the inflow end face for illustrating the shape of each cell;
FIG. 10 is a partially enlarged view of the inflow end face for illustrating the shape of each cell;
FIG. 11 is a partially enlarged view of the inflow end face for illustrating the shape of each cell;
FIG. 12 is a partially enlarged view of the inflow end face for illustrating the shape of each cell;
FIG. 13 is a partially enlarged view of the inflow end face for illustrating the shape of each cell;
FIG. 14A is a schematic view of an inflow end face of a reactor according to another embodiment of the invention;
FIG. 14B is a schematic view of the outflow end face of the reactor in FIG 14A;
FIG. 14C is a schematic view of the cross sectional taken along the line a-a' in FIGS. 14A and 14B;
FIG. 15 is a partially enlarged view for illustrating the flow of a process gas;
FIG. 16 is a schematic view of a structure of a gas recovery device according to an embodiment of the invention;
FIG 17 is a schematic view of a structure of a gas recovery device according to another embodiment of the invention; and
FIG. 18 is a schematic view of a structure of a gas recovery system according to an embodiment of the invention.

### DETAILED DESCRIPTION OF THE INVENTION

A reactor according to an embodiment of the invention includes: a honeycomb structure including an outer peripheral wall and porous partition walls provided on an inner side of the outer peripheral wall, the partition walls defining first cells and second cells through which a process gas containing a trapping target gas can flow, each of the first cells and the second cells extending from an inflow end face to an outflow end face of the honeycomb structure, the first cells and the second cells being adjacent to each other via the partition walls; and a functional material having a pellet shape, the functional material being filled in the second cells.

Also, a gas recovery device according to an embodiment of the invention is for recovering and releasing a trapping target gas contained in a process gas, the gas recovery system including: the reactor; a gas feed pipe configured to feed the process gas or a purge gas to an inflow port of the reactor; and a gas discharge pipe configured to discharge the process gas or the purge gas from an outflow port of the reactor.

Furthermore, a gas recovery system according to an embodiment of the invention is for recovering and releasing a trapping target gas contained in a process gas, the gas recovery system including: a gas recovery device including an attachable/detachable portion configure to attach and detach the reactor, a gas feed pipe configured to feed the process gas to an inflow port of the reactor, and a gas discharge pipe configured to discharge the process gas from an outflow port of the reactor; a gas release device including an attachable/detachable portion configure to attach and detach the reactor, a gas feed pipe configured to feed a purge gas to the inflow port of the reactor, and a gas discharge pipe configured to discharge the purge gas from the outflow port of the reactor; and a transfer device configured to transfer the reactor that has recovered the trapping target gas by the gas recovery device to the gas release device and also to transfer the reactor that has released the trapping target gas by the gas release device to the gas recovery device.

The reactor, the gas recovery device, and the gas recovery system according to an embodiment of the invention can increase an amount of a trapping target gas by increasing an amount of a functional material retained while reducing an increase in pressure loss, according to the above structure. The suppression of the increase in pressure loss can also lead to decreased operating costs of the reactor because kinetic energy required to allow the process gas to flow through the honeycomb structure can be reduced.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### <Reactor>

The reactor according to an embodiment of the invention can be suitably used to recover the trapping target gas contained in the process gas. Non-limiting examples of the process gas include exhaust gases emitted from factories, power plants, and the like, and the atmosphere. Non-limiting examples of the exhaust gas include combustion exhaust gases generated when burning fossil fuels, coal gasification gases made by gasifying coal or natural gases in thermal power plants, steel mills, and other facilities. Non-limiting examples of the trapping target gas include carbon dioxide (CO₂), nitrogen oxides (NOₓ), sulfur oxides (SOₓ), hydrogen sulfide (H₂S) and the like. Among these, the reactor according to an embodiment of the invention is particularly useful for recovering carbon dioxide (CO₂) from combustion exhaust gases and the atmosphere.

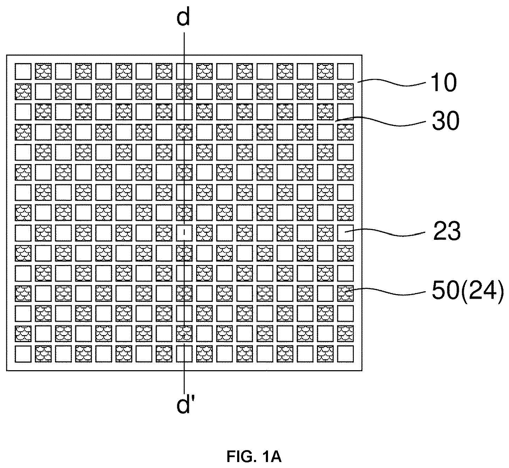

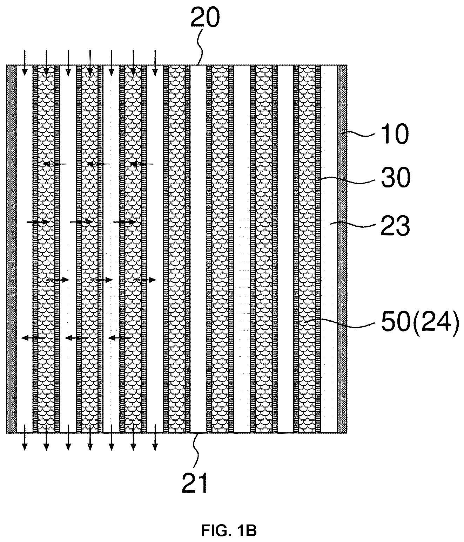

FIG. 1A is a schematic view of an inflow end face and an outflow end face of a reactor according to an embodiment of the invention. FIG. 1B is a schematic view of the cross sectional taken along the line a-a' in FIG. 1A. In FIG. 1B, the arrows indicate the flow of the process gas. The arrows represent only a portion of the flow, but the same flow is true for the portions that are not represented by the arrows.

As shown in FIGS. 1A and 1B, the reactor includes: a honeycomb structure having an outer peripheral wall 10 and porous partition walls 30 provided on an inner side of the outer peripheral wall 10, the partition walls 30 defining first cells 23 and second cells 24 each extending from an inflow end face 20 to an outflow end face 21 of the honeycomb structure, the first cells 23 and the second cells 24 being adjacent to each other via the partition walls 30; and a functional material 50 having a pellet shape, the functional material 50 being filled in the second cells 24. The first cells the second cells 24 can allow a process gas containing a trapping target gas to flow therethrough.

Further, although FIG. 1A illustrates an example in which all of the first cells 23 and the second cells 24 are adjacent to each other via the partition walls 30, at least some of the first cells 23 and the second cells 24 may be adjacent to each other via the partition walls 30 (i.e., there may be portions of the first cells 23 and the second cells 24 that are not adjacent to each other via the partition walls 30).

As shown in FIG. 1B, in the reactor, the process gas flows in from the first cells 23 and the second cells 24 on the inflow end face 20 side. The second cells 24 are filled with the functional material 50, but the process gas can flow through gaps in the filled functional material 50. Also, a part of the process gas that has flowed into the first cells 23 flows through the porous partition walls 30 into the second cells 24. Conversely, a part of the process gas that has flowed into the second cells 24 flows into the first cells 23 through the porous partition walls 30. For the process gas that has flowed into the second cells 24, the trapping target gas is recovered (e.g., adsorbed) by the functional material 50. The process gas that has flowed into the second cells 24 then flows out of the outflow end face 21.

The reactor may further include second plugged portions 41 provided on the inflow end face 20 side and/or the outflow end face 21 side of the second cells 24. By providing the second plugged portions 41, it becomes easier to control the flow of the processing gas, so that the recovery efficiency of the trapping target gas can be improved.

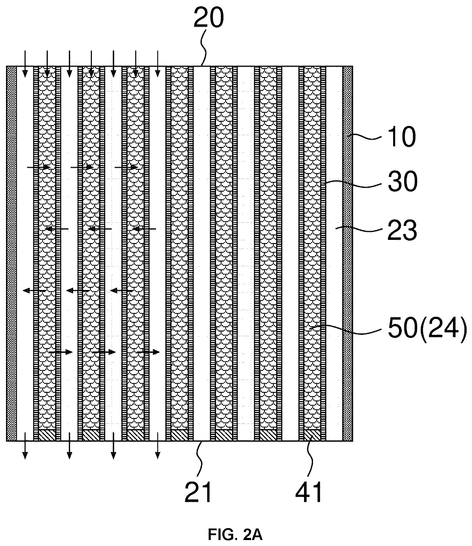

FIG. 2A is a schematic view of a cross section of a reactor in which the second plugged portions 41 are provided on the outflow end face 21 side of the second cells 24 and the second plugged portions 41 are dense, which cross section is parallel to the extending direction of each cell.

As shown in FIG. 2A, in the reactor, the process gas flows in from the first cells 23 and the second cells 24 on the inflow end face 20 side. A part of the process gas that has flowed into the first cells 23 flows through the porous partition walls 30 into the second cells 24. Also, a part of the process gas that has flowed into the second cells 24 flows through the porous partition walls 30 into the first cells 23. For the process gas that has flowed into the second cells 24, the trapping target gas is recovered (e.g., adsorbed) by the functional material 50. The process gas that has recovered the trapping target gas in the second cells 24 flows into the first cells 23 through the porous partition walls 30 and flows out from the outflow end face 21 of the first cells 23.

As used herein, the term "dense" means that the porosity is 10% or less, and the porosity in this case may be 5% or less.

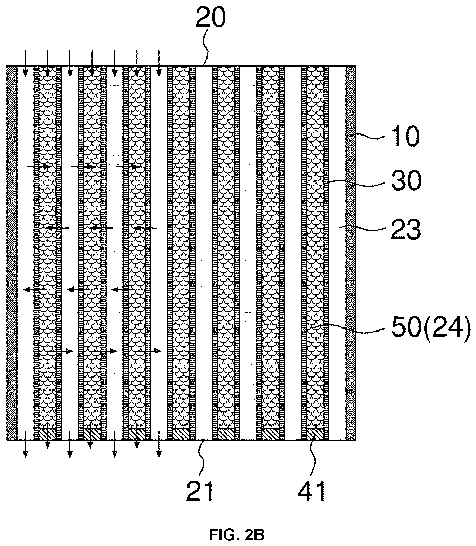

FIG. 2B is a schematic view of a cross section of a reactor in which the second plugged portions 41 are provided on the outflow end face 21 side of the second cells 24 and the second plugged portions 41 are porous, which cross section is parallel to the extending direction of each cell.

As shown in FIG. 2B, in this reactor, the second plugged portions 41 are porous, so that in addition to the flow of the process gas in the reactor illustrated in FIG. 2A, the process gas that has recovered the trapping target gas in the second cells 24 flows out from the outflow end face 21 of the second cells via the second plugged portions 41. Therefore, compared to the reactor illustrated in FIG. 2A, this reactor can increase the amount of the trapping target gas recovered while reducing the pressure loss when the process gas is allowed to flow.

As used herein, the term "porous" means that the porosity is 20% or more, and the porosity in this case may be 30% or more.

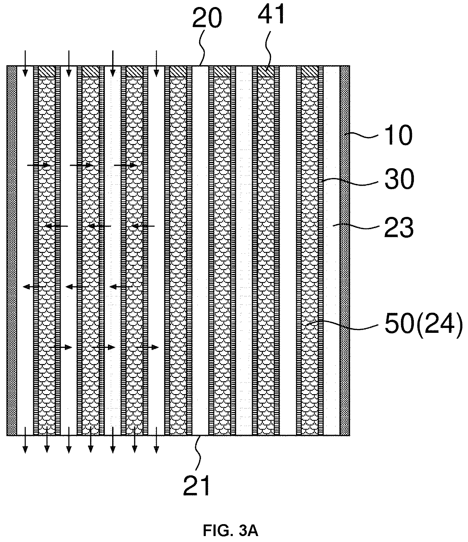

FIG. 3A is a schematic view of a cross section of a reactor in which the second plugged portions 41 are provided on the inflow end face 20 side of the second cells 24 and the second plugged portions 41 are dense, which cross section is parallel to the extending direction of each cell.

As shown in FIG. 3A, in the reactor, the process gas flows in from the first cells 23 on the inflow end face 20 side. A part of the process gas that has flowed into the first cells 23 flows through the porous partition walls 30 into the second cells 24. For the process gas that has flowed into the second cells 24, the trapping target gas is recovered (e.g., adsorbed) by the functional material 50. The treated gas that has recovered the trapping target gas in the second cells 24 either flows out from the outflow end face 21 of the second cells 24, or flows into the first cells 23 through the porous partitions 30 and flows out from the outflow end face 21 of the first cells 23.

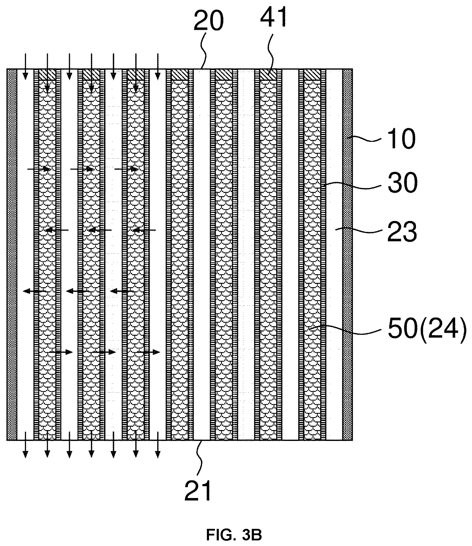

FIG. 3B is a schematic view of a cross section of a reactor in which the second plugged portions 41 are provided on the inflow end face 21 side of the second cells 24 and the second plugged portions 41 are porous, which cross section is parallel to the extending direction of each cell.

As shown in FIG. 3B, in this reactor, the second plugged portions 41 are porous, so that, in addition to the flow of the process gas in the reactor illustrated in FIG. 3A, the process gas flows into the second cells 24 through the second plugged portions 41. Therefore, compared to the reactor illustrated in FIG. 3A, this reactor can increase the amount of the trapping target gas recovered while reducing the pressure loss when the process gas is allowed to flow.

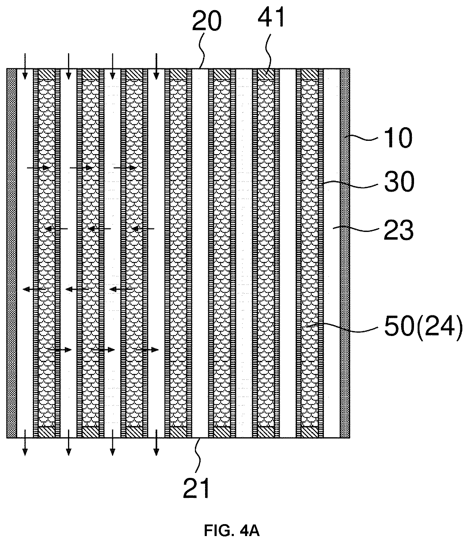

FIG. 4A is a schematic view of a cross section of a reactor in which the second plugged portions 41 are provided on the inflow end face 20 side and the outflow end face 21 side of the second cells 24, the second plugged portions 41 on the inflow end face 20 side are dense, and the second plugged portions 41 on the outflow end face 21 side are dense, which cross section is parallel to the extending direction of each cell.

As shown in FIG. 4A, in the reactor, the process gas flows in from the first cells 23 on the inflow end face 20 side. A part of the process gas that has flowed into the first cells 23 flows through the porous partition walls 30 into the second cells 24. For the process gas that has flowed into the second cells 24, the trapping target gas is recovered (e.g., adsorbed) by the functional material 50. The process gas that has recovered the trapping target gas in the second cells 24 flows into the first cells 23 through the porous partition walls 30 and flows out from the outflow end face 21 of the first cells 23.

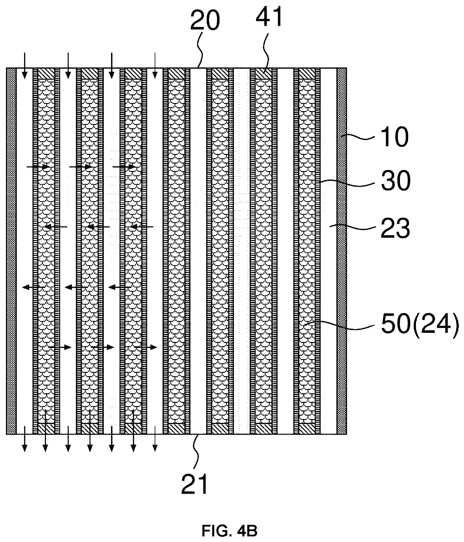

FIG. 4B is a schematic view of a cross section of a reactor in which the second plugged portions 41 are provided on the inflow end face 20 side and the outflow end face 21 side of the second cells 24, the second plugged portions 41 on the inflow end face 20 side are dense, and the second plugged portions 41 on the outflow end face 21 side are porous, which cross section is parallel to the extending direction of each cell.

As shown in FIG. 4B, in this reactor, the second plugged portions 41 on the outflow end face 21 side are porous, so that, in addition to the flow of the process gas in the reactor illustrated in FIG. 4A, the process gas flows out from the outflow end face 21 through the second plugged portions 41. Therefore, compared to the reactor illustrated in FIG. 4A, this reactor can increase the amount of the trapping target gas recovered while reducing the pressure loss when the process gas is allowed to flow.

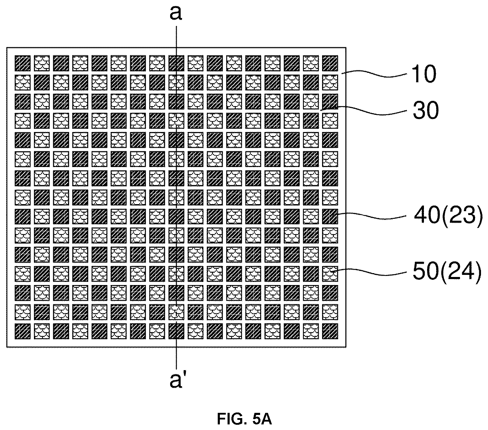

The reactor may further include first plugged portions 40 provided at the first cells 23 on the inflow end face 20 side. By providing the first plugged portions 41 at such a position, it becomes easier to control the flow of the processing gas, so that the recovery efficiency of the trapping target gas can be improved. Schematic views of reactors having such a structure are illustrated in FIGS. 5A to 5C.

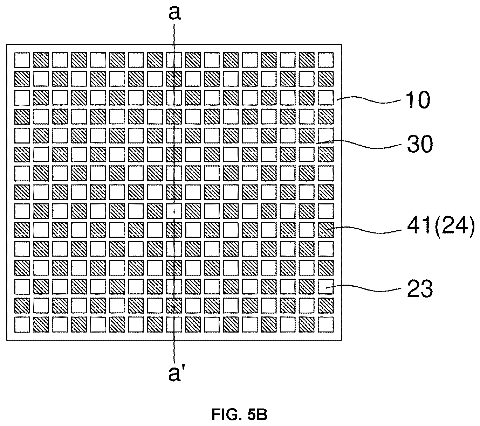

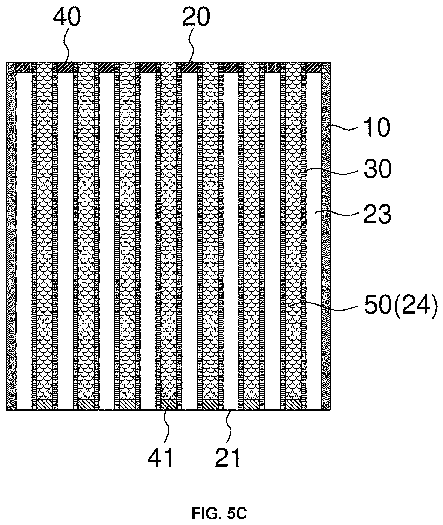

FIG. 5A is a schematic view of the inflow end face of the reactor. FIG. 5B is a schematic view of the outflow end portion of the reactor in FIG. 5A. FIG. 5C is a schematic view of the cross sectional taken along the line a-a' in FIGS. 5A and 5B.

As shown in FIGS. 1A to 5C, the reactor includes: a honeycomb structure having an outer peripheral wall 10 and porous partition walls 30 provided on an inner side of the outer peripheral wall 10, the porous partition walls 30 defining first cells 23 and second cells 24 each extending from an inflow end face 20 to an outflow end face 21 of the honeycomb structure, first plugged portions 40 provided at the first cells 23 on the inflow end face 20 side, and second plugged portions 41 provided at the second cells 24 on the outflow end face 21 side, the first cells 23 and the second cells 24 being adjacent to each other via partition walls 30; and a functional material 50 filled in the second cells 24. The first cells the second cells 24 can allow a process gas containing a trapping target gas to flow therethrough.

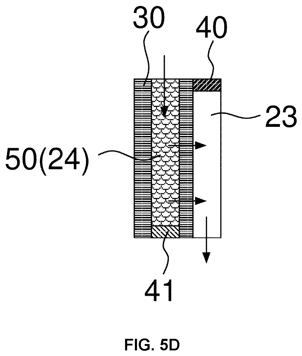

Here, FIG. 5D shows a partially enlarged view of the same cross section as FIG. 5C to illustrate the flow of the process gas. It should be noted that in FIG. 5D, the length in the extending direction of each cell is shorter than that in FIG. 5C from the viewpoint of providing easy understanding. In FIG. 5D, the arrows indicate the flow direction of the process gas.

As shown in FIG. 5D, in the reactor 100, the process gas flows into the second cells 24, which do not have plugged portions on the inflow end face 20 side. The second cells 24 are filled with the functional material 50, but the process gas can flow through gaps in the filled functional material 50. For the process gas that has flowed into the second cells 24, the trapping target gas is recovered (e.g., adsorbed) by the functional material 50. Since the second plugged portions 41 are provided on the outflow end face 21 side of the second cells 24, the process gas that has flowed into the second cells 25 and recovered the trapping target gas flows into the first cells 23 through the porous partition walls 30. The process gas that has flowed into the first cells 23 then flows out of the outflow end face 21.

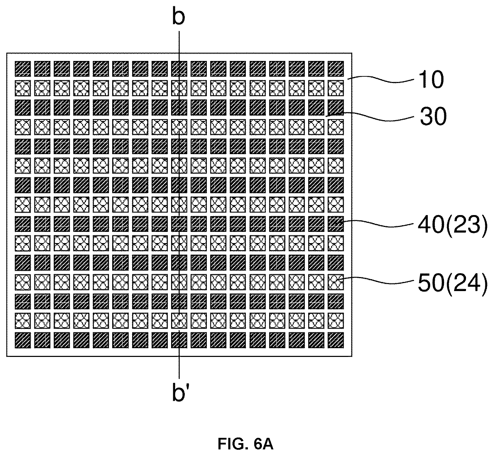

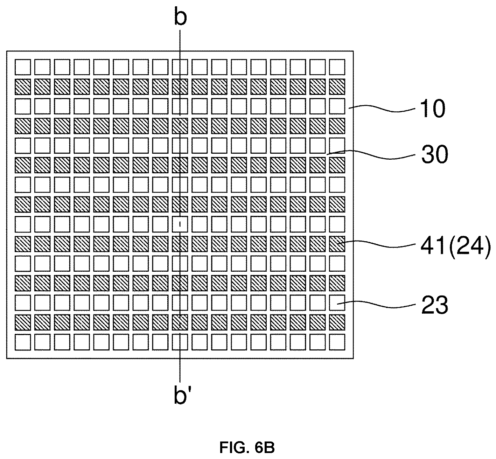

Further, although FIGS. 5A to 5C illustrate an example in which all of the first cells 23 and the second cells 24 are adjacent to each other via the partition walls 30, at least some of the first cells 23 and the second cells 24 may be adjacent to each other via the partition walls 30 (i.e., there may be portions of the first cells 23 and the second cells 24 that are not adjacent to each other via the partition walls 30). Schematic views of the inflow end face and outflow end face of the reactor having such a structure are shown in FIGS. 6A and 6B. The cross section taken along the line b-b' in FIGS. 6A and 6B is the same as the cross section taken along the line a-a' in FIG. 5A, and is therefore omitted.

As shown in FIGS. 6A and 6B, in the reactor, the first cells 23 and the second cells 24 are adjacent to each other via the partition walls 30 in the direction of the line b-b', while the first cells 23 and the second cells 24 are not adjacent to each other via the partition walls 30 in the direction orthogonal to the line b-b'. Even with this structure of the reactor 200, the above effects equivalent to those of the reactor 100 can be obtained.

The arrangement of the first cells 23 and the second cells 24 is not limited to the forms illustrated in FIGS. 5A to 5C and FIGS. 6A to 6B, and it may be any arrangement as long as at least some of spaces between the first cells 23 and the second cells 24 are adjacent to each other via the partition walls 30.

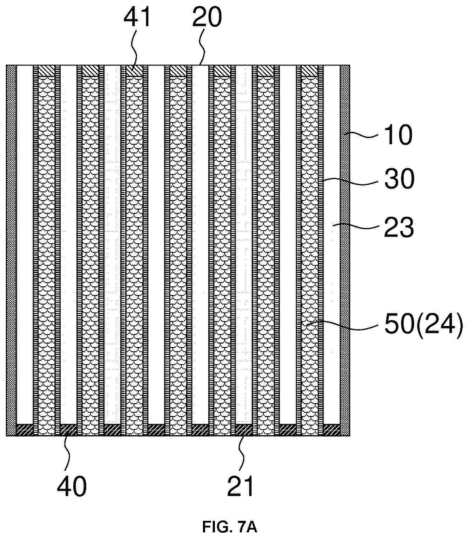

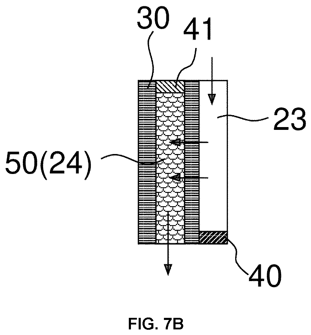

The reactor may further include first plugged portions 40 provided at the first cells 23 on the outflow end face 21 side. By providing the first plugged portions 41 at such a position, it becomes easier to control the flow of the processing gas, so that the recovery efficiency of the trapping target gas can be improved. FIG. 7A shows a schematic view of a cross section of the reactor having such a structure, which is parallel to the extending direction of each cell (first cells 23 and second cells 24). Also, FIG. 7B illustrates a partially enlarged view of the same cross section as FIG. 7A to illustrate the flow of the process gas. It should be noted that in FIG. 7B, the length in the extending direction of each cell is shorter than that in FIG. 7A from the viewpoint of providing easy understanding.

As shown in FIGS. 7A and 7B, the reactor includes first plugged portions 40 provided at the first cells 23 on the outflow end face 21 side and second plugged portions 41 provided at the second cells 24 on the inflow end face 20 side. The other structures may be the same as those of the above reactor. As shown in FIG. 7B, in the reactor having such a structure, the process gas flows into the second cells 23, which do not have plugged portions on the inflow end face 20 side. The process gas that has flowed into the first cells 23 flows into the second cells 24 through the porous partition walls 30 because the first plugged portions 40 are provided on the outflow end face 21 side. For the process gas that has flowed into the second cells 24, the trapping target gas is recovered (e.g., adsorbed) by the functional material 50. The process gas that has recovered the trapping target gas then flows out from the outflow end face 21.

Each component making up the above reactor will be described in detail below.

### (1. Honeycomb Structure)

The shape of the honeycomb structure is not particularly limited as long as the honeycomb structure has the above structure. For example, the outer shape of the cross section orthogonal to the extending direction of the flow paths (the first cells 23 and the second cells 24) of the honeycomb structure can be a polygon such as a triangle, quadrangle, hexagon and octagon, and a round shape such as a circle, an ellipse, an oval, an egg shape, an elongated circular shape, and a rounded quadrangle (a quadrangle consisting of a curved line as a whole, in which each side and corner is curved, and a radius of curvature of each side is greater than that of each corner). Among these, the shape of the honeycomb structure preferably has a quadrangular outer shape of the cross section (i.e., the shape of the honeycomb structure is a quadrangular pillar shape). It should be noted that the end faces (inflow end face 20 and outflow end face 21) have the same shape as the cross section.

In a preferable embodiment, the honeycomb structure has a quadrangular pillar shape with a length of one side of the inflow end face 20 and the outflow end face 21 of 100 to 500 mm (preferably 200 to 400 mm) and a length of the extending direction of the first cells 23 and the second cells 24 of 100 to 1000 mm (preferably 300 to 500 mm). With the honeycomb structure having this size, a sufficient amount of the functional material 50 filled in the second cells 24 can be ensured, so that practicality as a reactor can be ensured.

The shape of each cell (the first cells 23 and the second cells 24) is not particularly limited, but it may be polygon such as a triangle, quadrangle, hexagon, and octagon, and a round shape such as a circle, an ellipse, an oval, an egg shape, and an elongated circular shape, in the cross section of the honeycomb structure orthogonal to the extending direction of the flow paths (the first cells 23 and the second cells 24). The shape of each cell may be alone or in combination of two or more. Among these shapes of each cell, a triangle, a quadrangle, a hexagon, an octagon, or a combination thereof is preferable. By providing each cell having such a shape, it is possible to reduce the pressure loss when the process gas flows. It should be noted that the shape of each cell in the cross section is the same as that of each cell at the end faces (inflow end face 20 and outflow end face 21).

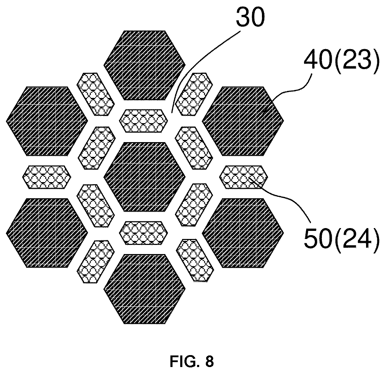

Here, examples of combinations of the respective cells having various shapes are shown in FIGS. 8 to 13. FIGS. 8 to 13 illustrate partially enlarged views of the inflow end faces of the reactors including the respective cells having various shapes.

The embodiment of FIG. 8 has two types of hexagonal cells having different sizes. The hexagonal second cells 24 are smaller than the hexagonal first cells 23.

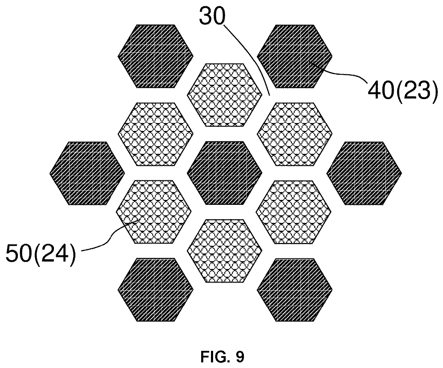

The embodiment of FIG. 9 has each hexagonal cell having the same size.

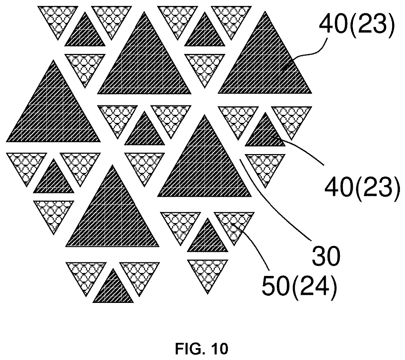

The embodiment of FIG. 10 has two types of triangular cells having different sizes. The first cells 23 are composed of triangular cells having two different sizes, and the smaller triangular cells have the same size as the second cells 24.

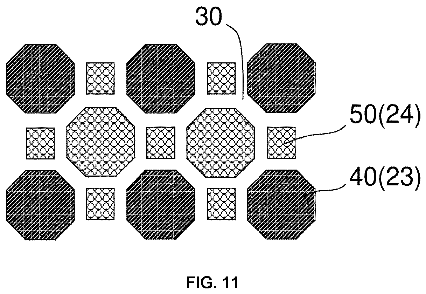

Embodiment of FIG. 11 has octagonal first cells 23, and octagonal and quadrangular second cells 24. The octagonal first cells 23 and the octagonal second cells 24 have the same size.

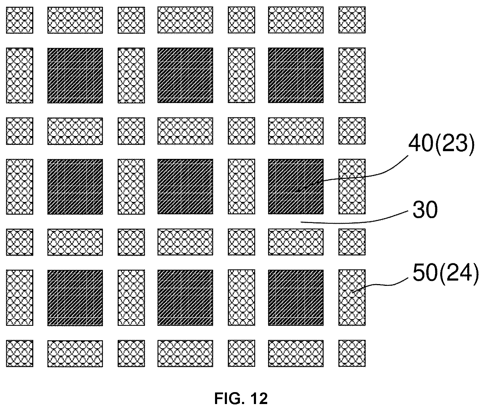

The embodiment of FIG. 12 has three types of rectangular cells having different sizes. Each second cells 24 has a smaller size than that of each first cell 23.

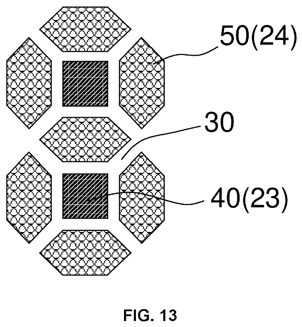

Embodiment of FIG. 13 has rectangular and hexagonal cells. The first cells 23 are quadrangular cells having the same size. The second cells 24 are hexagonal cells.

In any of the embodiments illustrated in FIGS. 8 to 13, the first cells 23 and the second cells 24 are arranged adjacent to each other via the partition walls 30.

The honeycomb structure preferably has the first cells 23 positioned facing the outer peripheral wall 10.

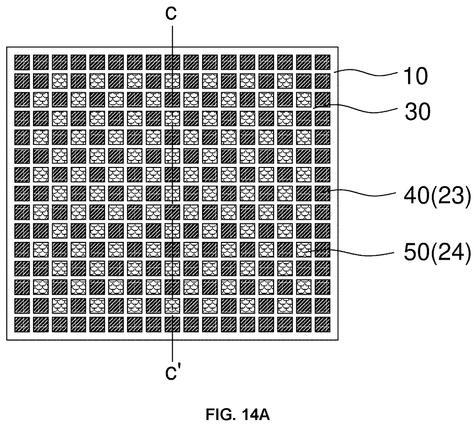

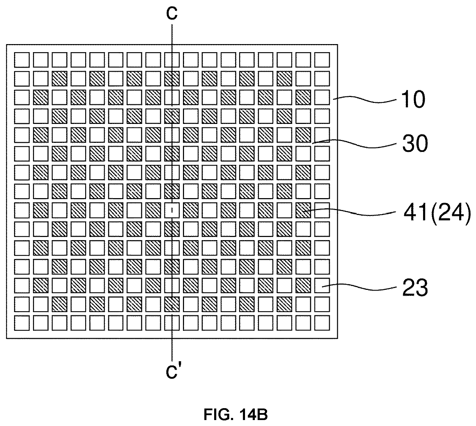

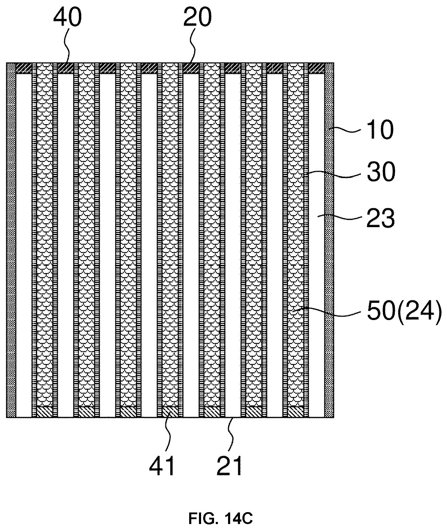

Here, a schematic view of the inflow end face of the reactor having this structure is illustrated in FIG. 14A, a schematic view of the outflow end face is illustrated in FIG. 14B, and a schematic view of the cross section taken along the line c-c' in FIGS. 14A and 14B is illustrated in FIG. 14C.

As illustrated in FIGS. 14A to 14C, the reactor is the same as the reactor as illustrated in FIGS. 5A to 5C with the exception that the first cells 23 are positioned facing the outer peripheral wall 10.

If the second cells 24 filled with the functional material 50 is located at the position facing the outer peripheral wall 10, the outflow path of the process gas is reduced, so that the process gas may not be sufficiently distributed in the second cells 24 facing the outer peripheral wall 10, and the effect of the functional material 50 may not be sufficiently achieved. Therefore, as illustrated in FIGS. 14A to 14C, the first cells 23 can be placed at the position facing the outer peripheral wall 10, thereby avoiding the use of wasteful functional material 50, which would otherwise be difficult to produce the effect sufficiently, and thus reducing production costs.

The honeycomb structure may be a honeycomb joined body that includes a plurality of honeycomb segments and joining layers that join outer peripheral surfaces (outer peripheral surfaces parallel to the extending direction of the honeycomb segment) of the plurality of honeycomb segments together. The use of the honeycomb joined body can increase the total cross-sectional area of the cells, which will be important for ensuring the flow rate of the process gas, while suppressing cracking. The joining layer can be formed by using a joining material. The joining material is not particularly limited, but a ceramic material obtained by adding a solvent such as water to form a paste can be used. The joining material may contain the same material as the outer peripheral wall 10 and the partition walls 30. In addition to the role of joining the honeycomb segments to each other, the joining material can also be used as an outer peripheral coating material after joining the honeycomb segments.

The thickness of the partition walls 30 is not particularly limited, but from the viewpoints of ensuring the strength of the honeycomb structure and reducing the pressure loss when the process gas passes through the partition walls 30, it may preferably be 0.05 mm to 5 mm, more preferably 0.10 mm to 4.5 mm, and even more preferably 0.15 mm to 4 mm.

Further, the "thickness of the partition walls 30" as used herein refers to a length of a line segment across the partition wall 30 when the centers of gravity of adjacent cells are connected by the line segment in a cross section of the honeycomb structure orthogonal to the extending direction of the flow paths (the first cells 23 and the second cells 24). The thickness of the partition walls 30 refers to an average value of the thicknesses of all the partition walls 30.

The porosity of the partition walls 30 is not particularly limited, but from the viewpoints of ensuring the strength of the honeycomb structure and reducing the pressure loss when the process gas passes through the partition walls 30, it may preferably be 30% or more and less than 80%, more preferably 35% to 75%, and even more preferably 40% to 70%.

It should be noted that the "porosity of the partition walls 30" as used herein means a porosity measured using the mercury intrusion method in accordance with JIS R1655: 2003.

The average pore diameter of the partition walls 30 is not particularly limited, but from the viewpoints of ensuring the strength of the honeycomb structure and reducing the pressure loss when the process gas passes through the partition walls 30, it may preferably be 10 µm to 300 µm, more preferably 15 µm to 280 µm, and even more preferably 20 µm to 260 µm.

The "average pore diameter of the partition walls 30" as used herein means the pore diameter of the partition walls 30 at 50% of an integrated value in a pore distribution determined by the mercury intrusion method in accordance with JIS R1655: 2003.

The thickness of the outer peripheral wall 10 is not particularly limited, but from the viewpoints of ensuring the strength of the honeycomb structure and the like, it may preferably be 0.05 mm to 10 mm, more preferably 0.20 mm to 8 mm, and even more preferably 0.30 mm to 6 mm.

As used herein, the thickness of the outer peripheral wall 10 refers to a length, in a normal line direction of a side surface of the honeycomb structure, from a boundary between the outer peripheral wall 10 and the outermost cell or partition wall 30 to the outer peripheral surface of the honeycomb structure in the cross section of the honeycomb structure orthogonal to the extending direction of the flow paths (the first cells 23 and the second cells 24).

The cell density of the honeycomb structure is not particularly limited, but from the viewpoint of ensuring the strength of the honeycomb structure and increasing the amount of the functional material 50 filled, it may preferably be 0.05 cells/cm² to 25 cells/cm², more preferably from 0.1 cells/cm² to 20 cells/cm², and even more preferably 0.5 cells/cm² to 15 cells/cm².

As used herein, the "cell density" refers a value obtained by dividing a number of cells by an area of one end face (the total area of the partition walls 30, the first cells 23 and the second cells 24, excluding the outer peripheral wall 10) of the honeycomb structure.

The materials of the outer peripheral wall 10 and the partition walls 30 are not particularly limited, but from the viewpoint of ensuring the strength of the honeycomb structure, they may contain one or more materials selected from cordierite, mullite, alumina, silicon carbide, and Si-bonded silicon carbide as main components.

The first plugged portions 40 are preferably dense, although not particularly limited thereto. This configuration makes it easier for the process gas to flow through the flow paths as described above.

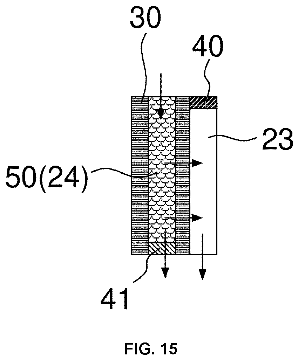

The second plugged portions 41 are preferably porous, although not particularly limited thereto. As illustrated in FIG. 15, such a configuration reduces the pressure loss when the process gas flows, because the process gas that has recovered the trapping target gas by the functional material 50 also flows out of the outflow end face 21 through the porous second plugged portions 41. FIG. 15 is a partially enlarged view of the same cross section as FIG. 5D to illustrate the flow of the process gas.

In the case of the reactors shown in FIGS. 7A and 7B, the pressure loss when the process gas flows can also be reduced because the process gas flows into the second cells 24 through the second plugged portions 41 on the inflow end face 20.

The materials of the first plugged portion 40 and the second plugged portions 41 are not limited, and they can be made of known materials such as ceramics and resins. From the viewpoint of production costs and productivity, it is preferably the resin. The characteristics of the first plugged portions 40 and the second plugged portions 41 can be ensured by selecting the type of material to be used, as needed.

For example, if the first plugged portions 40 and the second plugged portions 41 are dense, resin sheets, dense ceramics or glass can be selected and used, and the resin sheets are preferred in terms of production costs and productivity.

Also, if the second plugged portions 41 is porous, a resin porous sheet, porous ceramics or glass can be selected and used, and the resin porous sheet is preferable in terms of production costs and productivity.

### (2. Functional Material)

The functional material 50 is not limited as long as it is capable of recovering the trapping target gas contained in the process gas, and for example, an adsorbent can be used. By using the adsorbent as the functional material 50, the trapping target gas can be adsorbed and recovered, and the recovered gas can be easily desorbed by changing conditions such as temperatures.

The term "adsorbent" as used herein means a material capable of absorbing and storing the trapping target gas contained in the process gas.

The adsorbent may be appropriately selected according to the type of the trapping target gas, and is not particularly limited. Examples of the adsorbent effective for adsorption of the trapping target gas such as carbon dioxide (CO₂) include amine compounds, organometallic complexes, nanoporous ceramics or mesoporous silica on which the amine compounds and/or the organometallic complexes are supported. These can be used alone or in combination of two or more.

Non-limiting examples of the amine compounds include monoethanolamine (MEA), N-methyldiethanolamine (MDEA) and the like.

Non-limiting examples of the organometallic complexes include porous metal-organic frameworks (MOFs) that have a structure capable of adsorbing the trapping target gas in the pores.

The functional material 50 has a pellet shape. The use of the functional material 50 having the pellet shape can make it difficult for the functional material 50 to escape from the second cells 24, and also increase the space between the functional materials 50, thus lowering the pressure loss.

As used herein, the "pellet shape" means a shape having a substantially constant thickness, such as spherical, cylindrical, elliptical pillar-shaped, and polygonal pillar-shaped (e.g., triangular, quadrangular, pentagonal, hexagonal, etc.), the cross section of which is circular, elliptical, polygonal, or the like. The functional material 50 having the pellet shape has a particle diameter (which may hereinafter be referred to as a "pellet diameter") of, for example, 0.001 to 10 mm, preferably 0.1 to 10 mm, more preferably 0.5 to 10 mm, and even more preferably 1 to 10 mm, although not limited thereto. The pellet diameter means an average value of the short and long diameters. A typical functional material 50 having the pellet shape is spherical or cylindrical material with a diameter or length of 0.3 to 10 mm.

The particle size of the functional material 50 having the pellet shape is not limited, but it may be smaller on the outflow end face 21 side than in the central portion in the extending direction of the second cells 24. With such a configuration, the contact area of the functional material 50 on the outflow end face 21 side can be increased, making it easier to reliably recover the trapping target gas contained in the process gas.

The particle size of the functional material 50 having the pellet shape is determined by the following method: Using a micro video scope from Keyence Corporation, the diameter of the smallest circle of the circles circumscribed by the functional material 50 having the pellet shape is measured. The measurement is performed by randomly selecting 100 functional materials 50 having the pellet shape, and the average value is determined to be the particle diameter of the functional material 50 having the pellet shape.

The particle size of the functional material 50 having the pellet shape is preferably larger on the outer peripheral wall 10 side than in the central portion in the direction orthogonal to the extending direction of the second cells 24. The central portion is easy for the process gas to flow, while the outer peripheral wall 10 side is more difficult for the process gas to flow than the central portion. Therefore, the above configuration can suppress the preferential inflow of the process gas into the second cells 24 in the central portion and facilitate the uniform inflow of the process gas into the entire area in the direction orthogonal to the extending direction of the second cells 24.

The filling rate of the functional material 50 having the pellet shape in the second cells 24 is not particularly limited, but it may preferably be 20 to 70%. By controlling the filling rate to such a level, it is possible to increase a recovery efficiency of the trapping target gas contained in the process gas.

The filling rate can be measured, for example, by dividing the mass of the filled pellets (kg) by the density of the pellets (kg/m³) to calculate the volume of the filled pellets, and dividing it by the volume of the second cells 24 (m³) and multiplying it by 100.

The reactor according to an embodiment of the invention may be placed so that the extending direction of each cell is horizontal, or may be placed so that the extending direction of each cell is vertical, with the inflow end face 20 at the top and the outflow end face 21 at the bottom.

### <Method for Producing Reactor>

The method for producing the reactor according to an embodiment of the invention is not particularly limited as long as it is a method capable of making the structure as described above.

For example, the reactor according to an embodiment of the invention can be produced by preparing a honeycomb structure including an outer peripheral wall 10 and porous partition walls 30 provided on an inner side of the outer peripheral wall 10, the partition walls 30 defining first cells 23 and second cells 24 through which a process gas containing a trapping targe gas can flow, each of the first cells 23 and the second cells 24 extending from an inflow end face 20 to an outflow end face 21 of the honeycomb structure, the first cells 23 and the second cells 24 being adjacent to each other via the partition walls 30; and filling the second cells 24 with a functional material 50. When the first plugged portions 40 and the second plugged portions 41 are provided at predetermined positions of the honeycomb structure, the first plugged portions 40 and the second plugged portions 41 may be formed at an appropriate stage.

As an example, the method for producing the reactors illustrated in FIGS. 5A to 5D is described. The method for producing the reactor includes: a step of preparing a honeycomb structure including: an outer peripheral wall 10 and porous partition walls 30 provided on an inner side of the outer peripheral wall 10, the porous partition walls 30 defining first cells 23 and second cells 24 through which a process gas containing a trapping target gas can flow, each of the first cells 23 and the second cells 24 extending from an inflow end face 20 to an outflow end face 21 of the honeycomb structure, the first cells 23 and the second cells 24 being adjacent to each other via the partition walls 30 (step A); a step of forming second plugged portions 41 on the outflow end face 21 side of the second cells 24 (step B); a step of filling the second cells 24 with a functional material 50 (step C); and a step of forming first plugged portions 40 on the inflow end face 20 side of the first cells 23. Reactors having other structures can be produced in accordance with this method for producing the reactor.

In the step A, the method for producing the honeycomb structure is not particularly limited, and it can be carried out in accordance with a known method in the art. For example, the honeycomb structure can be produced as follows:
First, a green body containing ceramic powder is extruded into a desired shape to prepare a honeycomb formed body. At this time, the shape and density of each cell, and shapes and thicknesses of the outer peripheral wall 30 and the partition walls 10, and the like, can be controlled by selecting dies and jigs in appropriate forms. As the ceramic powder, powder of the above-described ceramics or raw material powder that will become the above-described ceramics after firing (for example, cordierite-forming raw materials) can be used. The cordierite-forming raw materials are raw materials that will form cordierite by firing. The cordierite-forming raw materials may preferably have a chemical composition of 30 to 45% by mass of alumina (Al₂O₃) (including the proportion of aluminum hydroxide that is converted to alumina), 11 to 17% by mass of magnesia (MgO) and 42 to 57% by mass of silica (SiO₂). The green body can also contain a binder, a pore former, a dispersant, water, an organic solvent and the like. The porosity and average pore size of the partition walls 30 can be controlled by selecting the type and amount of the ceramic powder, binder, pore former and dispersant to be used, as needed.

The honeycomb formed body obtained above can be then dried and fired to obtain the honeycomb structure. Non-limiting examples of the drying method include known drying methods such as hot air drying, microwave drying, dielectric drying, drying under reduced pressure, drying in vacuum, and freeze drying. Among these, a drying method that combines the hot air drying with the microwave drying or dielectric drying is preferable because the entire honeycomb formed body can be rapidly and uniformly dried.

Subsequently, in the step B, the second portions 41 are formed on the outflow end face 21 side of the second cells 24 of the honeycomb structure obtained above. The method for forming each plugged portion is not particularly limited, but it may be performed according to a known method. For example, when the second plugged portions are made of a resin sheet, the second plugged portions 41 can be formed by attaching the resin sheet to the outflow end face 21 of the second cells 24. Further, when the second plugged portions 41 are made of ceramics, glass, or the like, first, a thin film having openings corresponding to the second cells 24 of the outflow end face 21 of the honeycomb structure where the second plugged portions 41 are to be formed is attached. The outflow end face 21 of the honeycomb structure is then immersed in a slurry plugging material (ceramics, glass, etc.) and the plugging material can be allowed to penetrate into the second cells 24 of the honeycomb structure that are not plugged by the thin film, thereby forming the second plugged portions 41.

Subsequently, in the step C, the second cells 24 are filled with the functional material 50. The filling method is not particularly limited, and it may be carried out in accordance with the conventional method.

Subsequently, in the step D, the first plugged portions 40 are formed on the inflow end face 20 side of the first cells 23. The method for forming the first plugged portions 40 may be the same as the method for forming the second portions 41 as described above.

The order of the steps A to D is not limited, with the exception that the step C is performed after the step D. For example, it can be carried out in the order of the steps B, C and D, or the steps B, D and C, or the steps D, B and C.

### <Gas Recovery Device>

The gas recovery device according to an embodiment of the invention can be suitably used to recover and release the trapping target gas contained in the process gas.

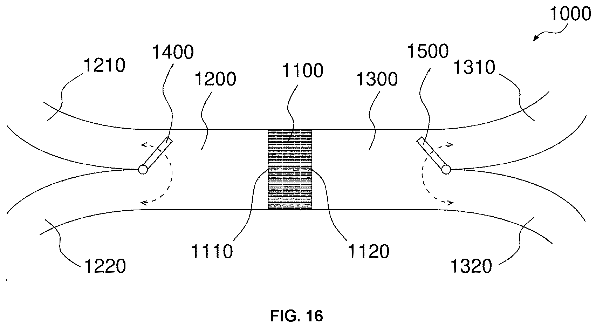

FIG. 16 is a schematic view of the gas recovery device according to an embodiment of the invention.

As shown in FIG. 16, a gas recovery device 1000 includes: a reactor 1100; a gas feed pipe 1200 configured to feed the process gas or a purge gas to an inflow port 1110 of the reactor 1100; and a gas discharge pipe 1300 configured to discharge the process gas or the purge gas from an outflow port 1120 of the reactor 1100. The reactors as described above are used for the reactor 1100, which can increase the recovery amount of the trapping target gas by increasing the amount of the functional material 50 retained while reducing the increase in pressure loss. Therefore, the gas recovery device 1000 can also increase the recovery amount of the trapping target gas while suppressing the increase in pressure loss.

The gas feed pipe 1200 has a gas feed branch pipe that branches into two parts. The gas feed branch pipe can be a first gas feed branch pipe 1210 configured to feed the process gas and a second gas feed branch pipe 1220 configured to feed the purge gas.

The gas discharge pipe 1300 has a gas discharge branch pipe that branching into two parts. The gas discharge branch pipe can be a first gas discharge branch pipe 1310 configured to discharge the process gas and a second gas discharge branch pipe 1320 configured to discharge the purge gas.

The gas recovery device 1000 further includes a feed gas switching valve 1400 configured to shut off the first gas feed branch pipe 1210 or the second gas feed branch pipe 1220, and a discharge gas switching valve 1500 configured to shut off the first gas discharge branch pipe 1310 or the second gas discharge branch pipe 1320.

In the gas recovery device 1000 having the above structure, when recovering the trapping target gas contained in the process gas, the feed gas switching valve 1400 is switched to shut off the second gas feed branch pipe 1220 and open the first gas feed branch pipe 1210, and the discharge gas switching valve 1500 is switched to shut off the second gas discharge branch pipe 1320 and open the first gas discharge branch pipe 1310. The process gas containing the trapping target gas is then fed from the first gas feed branch pipe 1210 to the inflow port 1110 of the reactor 1100 via the gas feed pipe 1200. The process gas fed to the reactor 1100 is discharged from the outflow port 1120 after the trapping target gas is recovered. The discharged process gas is discharged from the first gas discharge branch pipe 1310 via the gas discharge pipe 1300.

Subsequently, when the trapping target gas that has been recovered in the reactor 1100, the feed gas switching valve 1400 is switched to open the second gas feed branch pipe 1220 and shut off the first gas feed branch pipe 1210, and the discharge gas switching valve 1500 is switched to open the second gas discharge branch pipe 1320 and shut off the first gas discharge branch pipe 1310. The purge gas is then fed from the second gas feed branch pipe 1220 to the inflow port 1110 of the reactor 1100 via the gas feed pipe 1200. The purge gas fed to the reactor 1100 is discharged from the outflow port 1120 together with the trapping target gas captured in the functional material 50 of the reactor 1100. The purge gas containing the trapping target gas is discharged from the second gas discharge branch pipe 1320 via the gas discharge pipe 1300.

As used herein, the "purge gas" means a gas that can desorb the trapping target gas captured in the functional material 50 of the reactor 1100 and discharge it from the reactor 1100. The purge gas may be appropriately selected depending on the type of the trapping target gas. For example, when the trapping target gas is carbon dioxide, water vapor or the like may be used. The water vapor may preferably be at an elevated temperature such as 100°C or higher (e.g., 120°C).

To heat the purge gas to a predetermined temperature, the gas recovery device 1000 may further include a heating mechanism configured to heat the reactor 1100. With this configuration, the purge gas at room temperature can be fed from the second gas feed branch pipe 1220 to heat the purge gas to the predetermined temperature in the reactor 1100. Therefore, there is no need to preheat the purge gas fed to the gas recovery device 1000.

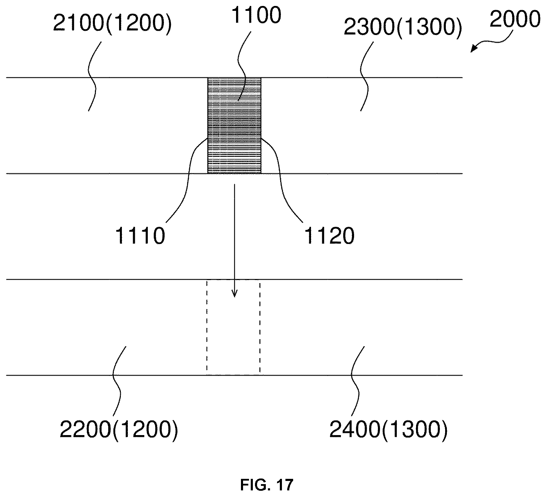

FIG 17 is a schematic view of a structure of a gas recovery device according to another embodiment of the invention.

As shown in FIG. 17, a gas recovery device 2000 has the same basic structure as that of the gas recovery device 1000 in FIG. 16. In other words, the gas recovery device 2000 includes: a reactor 1100; a gas feed pipe 1200 configured to feed a process gas or a purge gas to an inflow port 1110 of the reactor 1100; and a gas discharge pipe 1300 configured to discharge the process gas or the purge gas from an outflow port 1120 of the reactor 1100. Therefore, the gas recovery device 2000 can also increase the recovery amount of the trapping target gas while suppressing the increase in pressure loss.

The gas feed pipe 1200 has two independent gas feed pipes. The two independent gas feed pipes are a first gas feed pipe 2100 configured to feed the process gas, and a second gas feed pipe 2200 configured to feed the purge gas.

The gas discharge pipe 1300 has two independent gas discharge pipes. The two independent gas discharge pipes are a first gas discharge pipe 2300 configured to discharge the process gas, and a second gas discharge pipe 2400 configured to discharge the purge gas.

The reactor 1100 can be located between the first gas feed pipe 2100 and the first gas discharge pipe 2300 or between the second gas feed pipe 2200 and the second gas discharge pipe 2400.

The gas recovery device 2000 further includes a transfer mechanism (not shown) configured to transfer the reactor 1100 between the first gas feed pipe 2100 and the first gas discharge pipe 2300 or between the second gas feed pipe 2200 and the second gas discharge pipe 2400. The transfer mechanism is not particularly limited, and a known transfer mechanism (for example, a transfer mechanism having a motor drive) can be used.

In the gas recovery device 2000 having the above structure, when recovering the trapping target gas contained in the process gas, the reactor 1100 is placed between the first gas feed pipe 2100 and the first gas discharge pipe 2300 by the transfer mechanism. The process gas containing the trapping target gas is then fed from the first gas feed pipe 2100 to the inflow port 1110 of the reactor 1100. The process gas fed to the reactor 1100 is discharged from the outflow port 1120 after the trapping target gas is recovered. The discharged process gas is discharged from the first gas discharge pipe 2300.

Subsequently, when the trapping target gas recovered in the reactor 1100 is released, the reactor 1100 is placed between the second gas feed pipe 2200 and the second gas discharge pipe 2400 by the transfer mechanism. The purge gas is then fed from the second gas feed pipe 2200 to the inflow port 1110 of the reactor 1100. The purge gas fed to the reactor 1100 is discharged from the outflow port 1120 together with the trapping target gas captured in the functional material 50 of the reactor 1100. The purge gas containing the trapping target gas is discharged from the second gas discharge pipe 2400. The same purge gas as described above can be used.

To heat the purge gas to a predetermined temperature, the gas recovery device 2000 may further include a heating mechanism configured to heat the reactor 1100 located between the second gas feed pipe 2200 and the second gas discharge pipe 2400. With this configuration, the purge gas at room temperature can be fed from the second gas feed pipe 2200 to heat the purge gas to the predetermined temperature in the reactor 1100. Therefore, there is no need to preheat the purge gas fed to the gas recovery device 2000.

### <Gas Recovery System>

The gas recovery system according to an embodiment of the invention can be suitably used to recover and release the trapping target gas contained in the process gas.

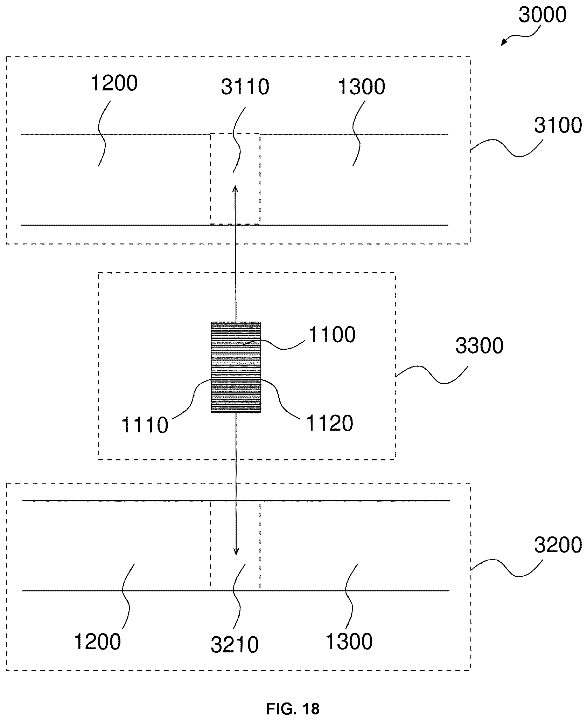

FIG. 18 is a schematic view of a structure of a gas recovery system according to an embodiment of the invention.

As shown in FIG. 18, a gas recovery system 3000 includes a gas recovery device 3100, a gas release device 3200, and a transfer device 3300.

The gas recovery device 3100 includes: an attachable/detachable portion 3110 configured to attach and detach the reactor 1100; a gas feed pipe 1200 configured to feed the process gas to the inflow port 1110 of the reactor 1100; and a gas discharge pipe 1300 configured to discharge the process gas from the outflow port 1120 of the reactor 1100.

The gas release device 3200 includes; an attachable/detachable portion 3210 configured to attach and detach the reactor 1100; a gas feed pipe 1200 configured to feed the purge gas to the inflow port 1110 of the reactor 1100; and a gas discharge pipe 1300 configured to discharge the purge gas from the outflow port 1120 of the reactor 1100.

The transfer device 3300 can transfer the reactor 1100 that has recovered the trapping target gas by the gas recovery device 3100 to the gas release device 3200, and can also transfer the reactor 1100 that has released the trapping target gas by the gas release device 3200 to the gas recovery device 3100.

In the gas recovery system 3000 having the structure as described above, when the trapping target gas contained in the process gas is recovered, the reactor 1100 is placed at the attachable/detachable portion 3110 of the gas recovery device 3100 by the transfer device 3300. The process gas containing the trapping target gas is then fed from the gas feed pipe 1200 of the gas recovery device 3100 to the inflow port 1110 of the reactor 1100. The process gas fed to the reactor 1100 is discharged from the outflow port 1120 after the trapping target gas is recovered. The discharged process gas is discharged from the gas discharge pipe 1300.

Subsequently, when the trapping target gas recovered in the reactor 1100 is released, the reactor 1100 placed in the gas recovery device 3100 is transferred to the attachable/detachable portion 3210 of the gas release device 3200 by the transfer device 3300. The purge gas is then fed from the gas feed pipe 1200 of the gas release device 3200 to the inflow port 1110 of the reactor 1100. The purge gas fed to the reactor 1100 is discharged from the outflow port 1120 together with the trapping target gas captured in the functional material 50 of the reactor 1100. The purge gas containing the trapping target gas is discharged from the gas discharge pipe 1300. The same purge gas as described above can be used.

To heat the purge gas to a predetermined temperature, the gas release device 3200 may further include a heating mechanism configured to heat the reactor 1100. With this configuration, the purge gas at room temperature can be fed from gas feed pipe 1200 and the purge gas can be heated to the predetermined temperature in the reactor 1100. Therefore, there is no need to preheat the purge gas fed to the gas release device 3200.

The transfer device 3300 is not particularly limited, but it may include a vehicle. This configuration allows the reactor 1100 to be transferred efficiently even if the gas recovery device 3100 and the gas release device 3200 are in separated positions.

### Description of Reference Numerals

10 outer peripheral wall
20 inflow end face
21 outflow end face
23 first cell
24 second cell
30 partition wall
40 first plugged portion
41 second plugged portion
50 functional material
1000, 2000 gas recovery device
1100 reactor
1110 inflow port
1120 outflow port
1200 gas feed pipe
1210 first gas feed branch pipe
1220 second gas feed branch pipe
1300 gas discharge pipe
1310 first gas discharge branch pipe
1320 second gas discharge branch pipe
1400 feed gas switching valve
1500 discharge gas switching valve
2100 first gas feed pipe
2200 second gas feed pipe
2300 first gas discharge pipe
2400 second gas discharge pipe
3000 gas recovery system
3100 gas recovery device
3110 attachable/detachable portion
3200 gas release device
3210 attachable/detachable portion
3300 transfer device

## Claims

1. A reactor, comprising:
a honeycomb structure comprising:
an outer peripheral wall and
porous partition walls provided on an inner side of the outer peripheral wall, the partition walls defining first cells and second cells through which a process gas containing a trapping target gas can flow, each of the first cells and the second cells extending from an inflow end face to an outflow end face of the honeycomb structure, the first cells and the second cells being adjacent to each other via the partition walls; and
a functional material having a pellet shape, the functional material being filled in the second cells.

2. The reactor according to claim 1, wherein the honeycomb structure further comprises second plugged portions provided on the inflow end face side and/or the outflow end face of the second cells.

3. The reactor according to claim 2, wherein the second plugged portions are provided on the outflow end face side of the second cells, and the second plugged portions are dense or porous.

4. The reactor according to claim 3, further comprising first plugged portions provided at the first cells on the inflow end face side.

5. The reactor according to claim 2, wherein the second plugged portions are provided on the inflow end face side of the second cells, and the second plugged portions are dense or porous.

6. The reactor according to claim 5, further comprising first plugged portions provided at the first cells on the outflow end face side.

7. The reactor according to claim 2, wherein the second plugged portions are provided on the inflow end face side and the outflow end face side of the second cells, the second plugged portions on the inflow end face side are dense, and the second plugged portions on the outflow end face side are dense or porous.

8. The reactor according to claim 4 or 6, wherein the first plugged portions are dense.

9. The reactor according to any one of claims 1 to 7, wherein each of the first cells and the second cells has a triangular, quadrangular, hexagonal, or octagonal shape, or a combination thereof, in a cross section orthogonal to an extending direction of the first cells and the second cells.

10. The reactor according to any one of claims 1 to 7, wherein the outer peripheral wall and the partition walls comprise at least one selected from cordierite, mullite, alumina, silicon carbide, and Si-bonded silicon carbide as a main component.

11. The reactor according to any one of claims 1 to 7, wherein the partition walls have a thickness of 0.05 mm to 5 mm.

12. The reactor according to any one of claims 1 to 7, wherein the partition walls have a porosity of 30% or more and less than 80%.

13. The reactor according to any one of claims 1 to 7, wherein the partition walls have an average pore diameter of 10 µm to 300 µm.

14. The reactor according to any one of claims 1 to 7, wherein the functional material is an adsorbent.

15. The reactor according to claim 14, wherein the adsorbent is at least one selected from an amine compound, an organometallic complex, and a nanoporous ceramic or mesoporous silica on which the amine compound and/or the organometallic complex are supported.

16. The reactor according to any one of claims 1 to 7, wherein a particle diameter of the functional material having the pellet shape is lower on the outflow end face side than in a central portion in the extending direction of the second cells.

17. The reactor according to any one of claims 1 to 7, wherein the particle diameter of the functional material having the pellet shape is higher on the outer peripheral wall side than in a central portion in a direction orthogonal to the extension direction of the second cells.

18. The reactor according to any one of claims 1 to 7, wherein the first cells are located at position facing the outer peripheral wall.

19. The reactor according to any one of claims 2 to 7, wherein the second plugged portions are made of a resin.

20. The reactor according to claim 4 or 6, wherein the first plugged portions are made of a resin.

21. The reactor according to any one of claims 1 to 7, wherein the honeycomb structure has a quadrangular pillar shape having a length of one side of the inflow end face and the outflow end face of 100 to 500 mm, and a length in the extending direction of the first cells and the second cells of 100 to 1,000 mm.

22. A gas recovery device for recovering and releasing a trapping target gas contained in a process gas, the gas recovery device comprising:
the reactor according to any one of claims 1 to 7;
a gas feed pipe configured to feed the process gas or a purge gas to an inflow port of the reactor; and
a gas discharge pipe configured to discharge the process gas or the purge gas from an outflow port of the reactor.

23. The gas recovery device according to claim 22,
wherein the gas feed pipe has a gas feed branch pipe that branches into two parts, the gas feed branch pipe being a first gas feed branch pipe configured to feed the process gas and a second gas feed branch pipe configured to feed the purge gas,
wherein the gas discharge pipe has a gas discharge branch pipe that branches into two portions, the gas discharge branch pipe being a first gas discharge branch pipe configured to discharge the process gas and a second gas discharge branch pipe configured to discharge the purge gas, and
wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

24. The gas recovery device according to claim 22,
wherein the gas feed pipe has two independent gas feed pipes, the gas feed pipes being a first gas feed pipe configured to feed the process gas and a second gas feed pipe configured to feed the purge gas,
wherein the gas discharge pipe has two independent gas discharge pipes, the gas discharge pipes being a first gas discharge pipe configured to discharge the process gas and a second gas discharge pipe configured to discharge the purge gas,
wherein the reactor can be provided between the first gas feed pipe and the first gas discharge pipe or between the second gas feed pipe and the second gas discharge pipe, and
wherein the gas recovery device further comprises a transfer mechanism configured to transfer the reactor between the first gas feed pipe and the first gas discharge pipe or between the second gas feed pipe and the second gas discharge pipe.

25. The gas recovery device according to claim 22, further comprising a heating mechanism configured to heat the reactor.

26. A gas recovery system for recovering and releasing a trapping target gas contained in a process gas, the gas recovery system comprising:
a gas recovery device comprising an attachable/detachable portion configure to attach and detach the reactor according to any one of claims 1 to 7, a gas feed pipe configured to feed the process gas to an inflow port of the reactor, and a gas discharge pipe configured to discharge the process gas from an outflow port of the reactor;
a gas release device comprising an attachable/detachable portion configure to attach and detach the reactor, a gas feed pipe configured to feed a purge gas to the inflow port of the reactor, and a gas discharge pipe configured to discharge the purge gas from the outflow port of the reactor, and
a transfer device configured to transfer the reactor that has recovered the trapping target gas by the gas recovery device to the gas release device and also to transfer the reactor that has released the trapping target gas by the gas release device to the gas recovery device.

27. The gas recovery system according to claim 26, wherein the transfer device comprises a vehicle.
